# EUROPEAN PATENT SPECIFICATION

(11) **EP 0 742 257 B1**
(45) Date of publication and mention of the grant of the patent: **28.01.2004**
(21) Application number: 96107473.9
(22) Date of filing: 10.05.1996
(51) Int. Cl.: C08K 5/3435, C08K 5/54

(54) **Process for the dynamic cross-linking and stabilization of a heterophasic polypropylene composition**
Verfahren zur Vernetzung und Stabilisierung von heterophasischen Polypropylen-Zusammensetzungen
Procédé de réticulation et de stabilisation de compositions de propylène hétérophasique

(30) Priority: 11.05.1995 IT MI950945; 19.05.1995 IT MI951026
(43) Date of publication of application: 13.11.1996
(73) Proprietor: Basell Poliolefine Italia S.p.A., 20124 Milano (IT)
(72) Inventor: Zucchelli, Ugo, 44043 Mirabello, Ferrara (IT); Braga, Vittorio, 44100 Ferrara (IT)
(74) Representative: Zumstein, Fritz, Dr.

(56) References cited:
- US-A- 4 614 753
- US-A- 4 889 881
- DATABASE WPI Derwent Publications Ltd., London, GB; AN 95-371230 XP002011181 & JP-A-07 252 392 (NIPPON GOSEI) , 3 October 1995
- DATABASE WPI Derwent Publications Ltd., London, GB; AN 93-383191 XP002011182 & JP-A-05 287 131 (ASAHI) , 2 November 1993
- RESEARCH DISCLOSURE, vol. 273, no. 008, January 1987, pages 5-6, XP000579674 ANONYMOUS: "hindered amine light stabilizers as long term heat stabilizers for crosslinked polymers "

## Description

The present invention concerns a composition suited to cause a dynamic cross-linking of olefin polymers, and a process of dynamic cross-linking of the polymers based on the use of the above mentioned composition.

It is known in the art that a number of polymers, such as the elastomers, are suitable to be dynamically cross-linked with organic peroxides, and also known is the introduction of antioxidants comprising phenols and/or phosphites, before or during the polymer cross-linking phase, in order to stabilize the cross-linked polymers.

However, it is known in the art that the mixtures where either said organic peroxides or antioxidants are present, are considerably unstable, and that using said mixtures to cross-link polymers involves a high use of peroxides and antioxidants. In fact, the concentration of peroxides is diminished by the reaction of the antioxidant with the peroxide itself, thus reducing the effectiveness of the cross-linking system.

In order to avoid said problems due to the simultaneous presence of organic peroxides and antioxidants during the cross-linking phase, particular mixtures have been introduced that can be used in the cross-linking of polyolefins. Said mixtures are described in published European patent application EP-A-426145 (Atochem North America Inc).

According to said patent application the selection of a particular antioxidant comprising organic sulfide allows one to maintain the cross-linking effectiveness of the cross-linking composition despite the presence of an antioxidant.

The above mentioned European patent application describes stabilizing and cross-linking compositions comprising, in addition to selected organic sulfides, as essential antioxidants, also other types of stabilizers that achieve a synergetic activity with the organic sulfides, such as phenols, secondary amines, and HALS (Hindered Amine Light Stabilizers). In the examples found in said application only the phenolic antioxidants and phosphites derivatives are used as synergetic stabilizers with the organic sulfides. Neither the description nor the examples mention a particular effect of the HALS in the cross-linking process.

The Applicant has now found that in addition to the specific antioxidants described in the above mentioned European patent application, the stabilizers belonging to the class of the sterically hindered amines (HALS) also do not restrict the efficacy of the organic peroxides in the olefin polymers cross-linking process. Said HALS have the advantage of being well known in the field of olefin polymer stabilization, and therefore are easily available.

The Applicant has also found that said stabilizers not only do not hinder the cross-linking action of the peroxides, but also increase the cross-linking effectiveness of the composition used. As a consequence, thanks to the HALS one can obtain higher degrees of cross-linking at equal quantity of organic peroxide used.

The high degree of cross-linking is shown by a decrease in oil absorption, since the quantity of oil absorbed is an indirect measure of the degree of cross-linking of the polymer, and by the high values of insolubility in xylene.

By increasing the degree of cross-linking some of the mechanical properties of the polymers are enhanced. For example, highly cross-linked elastomers are more elastic, as shown by the lower compression set values with respect to those with lower cross-linking. Therefore, a decrease in compression set also confirms the cross-linking trend deduced from the oil absorption evaluations.

The use of the composition of the present invention does not adversely affect the stabilization of the cross-linked polymer. In fact, the physical-mechanical properties of the cross-linked polymers are higher than the standards required even after aging.

In addition, the use of HALS as stabilizers in the cross-linking compositions instead of mercaptoazoles/phenylamines or thioethers commonly used in cross-linking systems, improves considerably the organolectic characteristics of the cross-linked polymer, reducing the disagreeable odor exuded by the latter, and eliminating the coloration conferred by the above mentioned antioxidants.

An other advantage offered by the cross-linking system of the present invention consists of a saving in the use of the organic peroxides and antioxidants employed for the cross-linking, and the stabilization of the polymer.

Therefore, object of the present invention is a process for the dynamic cross-linking and stabilization of a heterophasic polypropylene composition which composition does not contain organic sulfides as antioxidants, and comprises at least one organic peroxide and at least one himdered amine light stabilizer (HALS) consisting of an oligomeric compound or a monomeric compound. Preferably the oligomeric compounds are selected from general formulae (I) to (V): 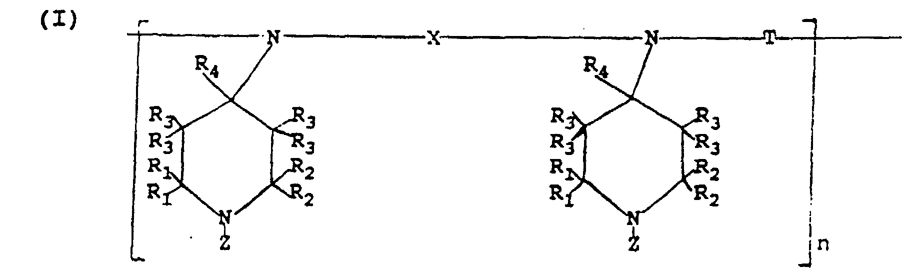 where n is an integer from 1 to 100;
the R₁ radicals, equal or different, are C₁-C₄ alkyl or tetramethylpiperidine radicals, or the alkyl radicals form, with the piperidine carbons to which they are bonded, a C₅-C₉ cycloalkyl radical; the R₂ radicals, equal or different, are hydrogen, or C₁-C₁₈ alkyl, C₇-C₁₈ aralkyl radicals, or the alkyl radicals form, with the piperidine carbons to which they are bonded, a C₅-C₁₀ cycloalkyl radical; the R₃ radicals, equal or different, are hydrogen, or a C₁-C₁₈ alkyl, or a C₇-C₁₈ arylalkyl radicals; the R₄ radical is hydrogen, or a C₁-C₈ alkyl, or a benzyl radical; Z is hydrogen, or a C₁-C₁₈ alkyl, C₁-C₁₂ alkylene, C₇-C₁₈ aralkyl, C₂-C₄ acyl, C₂-C₁₈ alkanol, C₃-C₁₈ alkoxyalkyl, oxyl, cyanomethyl, xylene radical, or a radical having a valence ranging from 1 to 4, and containing from 1 to 4 oxylic groups and optionally ether, ester, or etheroxylic groups, where the valences of said radical are bonded to the nitrogen of the piperidine groups, or a bivalent saturated radical containing at least one ester or amidic group; and
X is a bivalent organic radical, preferably a C₁-C₁₂ alkylene, or a bivalent radical containing at least one ester or amide group.

Preferably Z is a C₁-C₁₂ alkyl or C₇-C₁₁ aralkyl radical, or a bivalent saturated radical containing at least an ester group, the valences of said radical being bonded to the nitrogen of the piperidine groups.

The methods for the preparation of the compounds of formula (I) are described in U.S. patent No. 4104248. 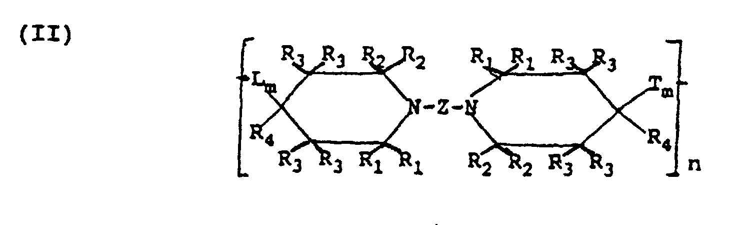 where L is a bivalent organic radical, preferably a C₁-C₁₂ alkylene, a -N(R)- (where R is hydrogen or a C₁-C₁₈ alkyl radical), or -O- radical;
T is a bivalent organic radical of the aliphatic, cycloaliphatic, aromatic, or heterocyclic type, containing N or O, S, P atoms in the chain or in the heterocyclic ring;
Z is a C₁-C₁₂ alkylene or a bivalent saturated radical containing at least one ester or amide group;
m is a number from 0 to 1; and
n, R₁, R₂, R₃, and R₄ are as defined above for formula (I). 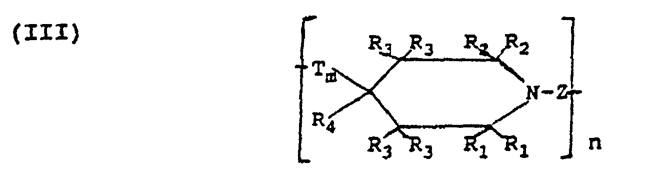 where n, T, R₁, R₂, R₃, and R₄ are as defined above for formula (I); and
m and Z are as defined above for formula (II).

The methods for the preparation of the compounds of formulae (II) and (III) are described in U.S. patent No. 4233410. 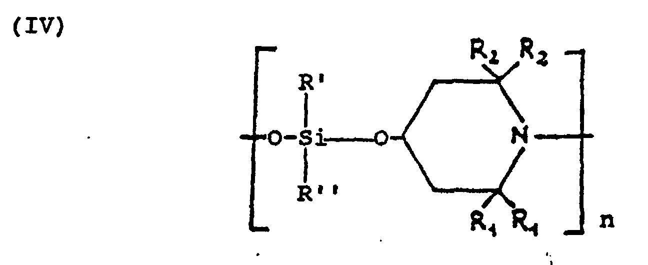 where the R₁ and R₂ radicals are as defined above for formula (I), preferably are methyl radicals; R' and R'' independently from one another are hydrogen, C₁-C₈ alkyl, C₁-C₈ alkoxy radical, preferably are metyl and propyl radicals; and n is an integer from 2 to 15. The preferred compound known as Uvasil 299, marketed by Enichem Synthesis has the following formula 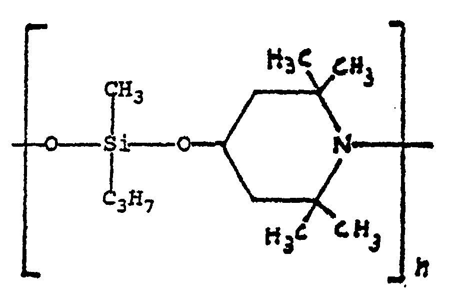 where n is an iteger from 3 to 9.

Preferred examples of monomeric compounds suitable for the compositions of the present invention are represented by compounds having general formula (V). 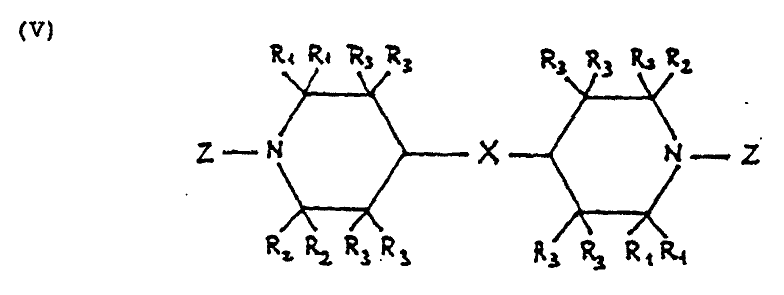 where R₁, R₂, R₃, X and Z are as defined above for formula (I).

The methods for the preparation of the compounds of formula (V) are described in U.S. patent No. 4233410.

The preferred compounds among those of general formula (I) have the following formulae (VI) and (VII): 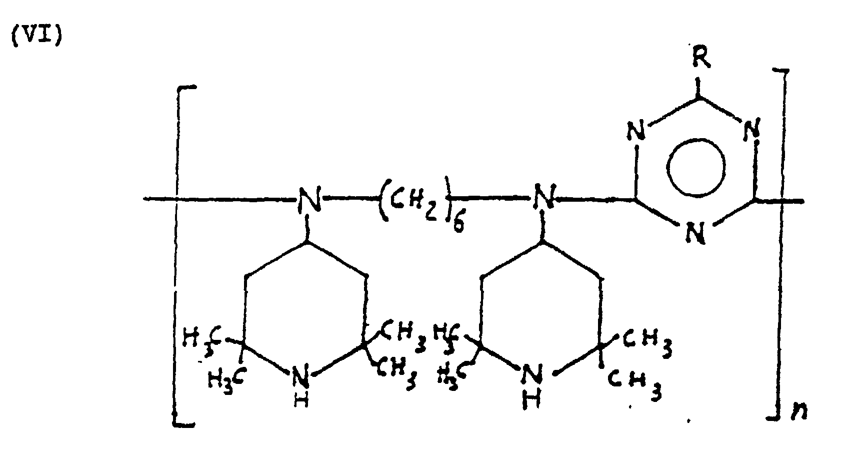 where n is an integer from 2 to 20;
R is an -NHR₅ radical [where R₅ is a C₁-C₁₀ alkyl radical, preferably -C(CH₃)₂-CH₂-C(CH₃)₃] or -N[(CH₂)-(CH₂)]₂O;
and 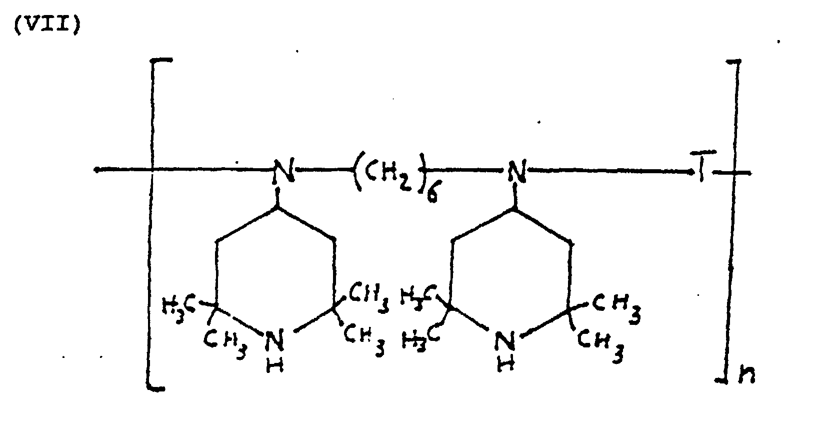 where T is a -CH₂-CH₂-; and n is an integer from 2 to 20.

The preferred compounds comprised in general formula (II) have the following formulae (VIII) and (IX): 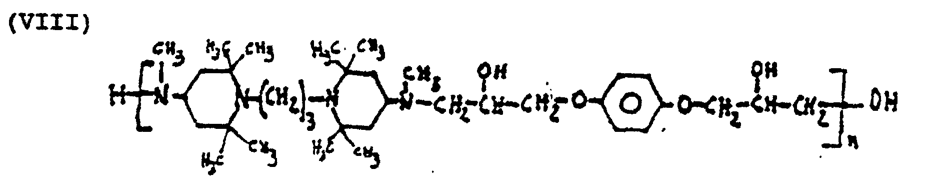 where n is an integer from 2 to 20;
and 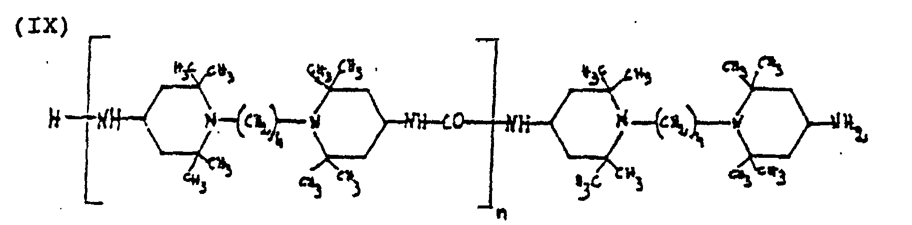 where n is an integer from 2 to 20.

The preferred compounds comprised in general formula (III) have the following formula: 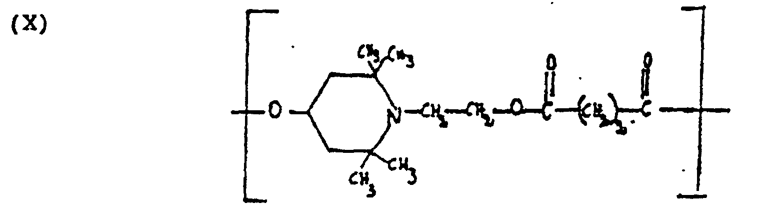 where n is an integer from 2 to 20.

The preferred compounds comprised in general formula (V) have the following formulae (XI) and (XII): 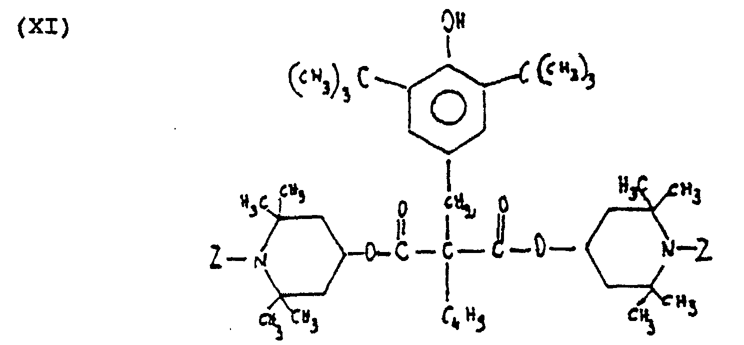 where Z is hydrogen, or a methyl radical;
and

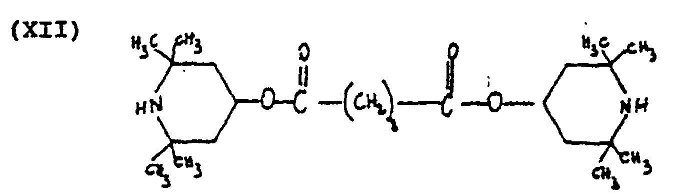

Examples of commercial compounds that are commonly used for the stabilization of polymers that are comprised in the above mentioned general formulas are: poly(N-β-hydroxymethyl-2,2,6,6-tetramethyl-4-hydroxy-piperidyl succinate) (Tinuvin 622), bis(1,2,2,6,6-pentamethyl-4-piperidyl)sebacate (Tinuvin 765), bis(2,2,6,6-tetramethyl-4-piperidyl)sebacate (Tinuvin 770), poly{[6-(1,1,3,3-tetramethylbutyl)-imino]-1,3,5-triazine-2,4-diyl][4-(2,2,6,6-tetramethylpiperidyl)-imino]hexamethylene-[4-(2,2,6,6-tetramethylpiperidyl)imino} (Chimassorb 944), marketed by Ciba Geigy; polymethyl propyl-3-oxy[4-(2,2,6,6-tetramethyl)-piperidinyl]siloxane (Uvasil 299), marketed by Enichem Synthesis; and poly[hexamethylenedi(4-amino-2,2,6,6-tetramethyl)piperidine] (Spinuvex A-36), marketed by Ciba Geigy.

The organic peroxides that can be used in the cross-linking composition of the present invention are those commonly used in the cross-linking process. In particular, it is preferable to use peroxides having long half-lifetimes, from 3 to 20 minutes, for example, at the temperature used in the cross-linking process. Specific examples of said organic peroxides are: di-tert-butyl peroxide isopropyl benzene, dicumyl peroxide, monocumyl(tert-butyl)peroxide, di(tert-butyl) peroxide, 2,5-dimethyl-2,5-di(tert-butylperoxy)-hexane.

In the cross-linking composition of the present invention the organic peroxide/HALS weight ratio generally is from 1:1 to 6:1, preferably from 1.2:1 to 4:1.

The HALS amount used in the cross-linking preferably is from 0.01 to 3%, more preferably 0.05-1%, by weight with respect to the total weight of the composition that is subjected to cross-linking.

The quantity of organic peroxide used in the cross-linking is preferably from 0.1 to 8%, more preferably 0.5-5%, by weight with respect to the total weight of the composition that is subjected to cross-linking.

Moreover, the cross-linking composition of the present invention contains preferably one or more cross-linking coagent(s). Said coagents are selected from those commonly used for this purpose. Examples of preferred coagents are: difurfuraldazine, 1,2-polybutadiene, triallyl cyanurate, triallyl isocyanurate, and derivatives of the methacrylate and acrylate compounds, such as ethylene glycol dimethyl cyanurate.

The quantity of cross-linking coagents used in the cross-linking depends on the degree of cross-linking that one wants to impart to the final cross-linked composition. Generally speaking, it preferably varies from 0.01 to 8%, more preferably from 0.05 to 3%, by weight with respect to the total weight of the composition that is subjected to cross-linking.

The organic peroxide/cross-linking coagent weight ratio generally is from 1:0.05 to 1:0.6, preferably from 1:0.1 to 1:0.5.

In addition to the HALS, the cross-linking composition of the present invention can contain other stabilizers, such as sterically hindered phenols, phosphites, secondary amines, and quinoline. The sterically hindered phenols and phosphites are the preferred coadjuvant stabilizers.

The weight ratio between the HALS and the other stabilizers is approximately from 0.1 to 10, preferably from 1 to 3.

The cross-linking composition of the present invention is used to cross-link and stabilize, heterophasic polypropylene compositions comprising (by weight):
A) from 10 to 60 parts of a homopolymer of propylene, or a random copolymer of propylene with ethylene and/or a C₄-C₈ α-olefin, containing more than 80% of propylene, and being insoluble in xylene at ambient temperature for more than 80%;
B) from 0 to 25 parts, preferably from 1 to 25 parts, of an essentially linear semicrystalline copolymer of ethylene containing propylene and/or a C₄-C₈ α-olefin, insoluble in xylene at ambient temperature; and
C) from 15 to 87 parts of a copolymer of ethylene with propylene or a C₄-C₈ α-olefin, or mixtures thereof, and optionally minor quantities of diene, said copolymer, containing from 10 to 80% of ethylene, being soluble in xylene at ambient temperature.

The C₄-C₈ α-olefins present in the above mentioned copolymers are linear or branched alkenes, and are preferably selected from the following compounds: 1-butene, 1-pentene, 1-hexene, 1-octene, and 4-methyl-1-pentene. The 1-butene is the α-olefin particularly preferred.

Fraction (A) is present in the heterophasic polypropylene composition preferably in quantities ranging from 10 to 50 parts by weight, and preferably comprises a homopolymer of propylene with an insolubility in xylene at ambient temperature greater than 90% by weight, more preferably from 95 to 98%, or a copolymer containing more than 85% by weight of propylene, more preferably from 90 to 99%.

Fraction (B) is present in the heterophasic polypropylene composition preferably in quantities ranging from 7 to 15 parts by weight, and has a crystallinity preferably ranging about from 20 to 60%, determined by DSC (Differential Scanning Calorimetry). The copolymer comprised in said fraction is preferably selected from the following types of copolymers: ethylene-propylene, containing greater than 55% by weight of ethylene; ethylene-propylene-C₄-C₈ α-olefin, containing from 1 to 10% by weight of said α-olefin, and 55-98% by weight, preferably 80-95%, of ethylene and said α-olefin; ethylene-C₄-C₈ α-olefin, containing 55-98% by weight, preferably 80-95%, of said α-olefin.

Fraction (C) is present in the heterophasic polypropylene composition preferably in quantities ranging from 30 to 75 parts by weight, and preferably comprises a copolymer selected from: an ethylene-propylene copolymer containing from 15% to 70% by weight, preferably from 20 to 60%, of ethylene; an ethylene-propylene-C₄-C₈ α-olefin copolymer, containing from 1 to 10% by weight of said α-olefin, preferably from 1 to 5%, where the total quantity of ethylene and α-olefin is from 20 to less than 40% by weight; an ethylene-α-olefin copolymer containing from 20 to less than 40% by weight, preferably from 20 to 38%, more preferably from 25 to 38%, of said α-olefin. The dienes optionally present in the copolymers of said fraction are present in quantities preferably equal to or less than 10% by weight, and are selected preferably from: 1,3-butadiene, 1,4-hexadiene, 1,5-hexadiene, and 1-ethylidene-5-norbornene.

The heterophasic compositions are prepared either by mechanically blending components (A), (B), and (C) in the molten state, or using a sequential polymerization process carried out in two or more stages, and using highly specific Ziegler-Natta catalysts.

Examples of the above mentioned heterophasic polypropylene compositions, as well as the catalysts and the polymerization processes commonly used for their preparation are described in published European patent applications No. 400,333 and 472,946.

The cross-linking composition of the present invention is prepared, for example, blending its components until a good dispersion of the latter is obtained.

The operating conditions used for the preparation of the cross-linking composition are not critical, however, the mixing conditions must be such as not to cause the degradation of the organic peroxide that may optionally be present. It is preferable to operate at ambient temperature.

The dynamic cross-linking process is carried out according to known techniques. In particular, for example, the above mentioned elastomeric or thermoplastic polymers, or their mixtures, are subjected to mastication and/or mixing in the presence of the cross-linking composition of the present invention, at a temperature that is sufficiently high to melt the polymer mass (generally from 160 to 260°C), after which the mastication or mixing is continued for a time sufficient to cause the cross-linking of the polymer.

As an alternative, for example, initially one adds to the polymer to be cross-linked either the organic peroxide or the HALS, optionally mixed with other compounds, and only afterwards does one add the missing compound, i.e., the HALS or organic peroxide respectively, optionally mixed with other compounds.

According to the above mentioned variation, therefore, the organic peroxide and the light stabilizer are added separately at consecutive times.

The mastication, and/or mixing and cross-linking process can be carried out in an internal mixer, or in a Buss single-screw extruder, or a twin-screw extruder with mixing components. One can also operate in a number of machines placed in succession, where in the first ones one carries out the intimate mixing and homogenization of the composition, and the cross-linking takes place in the others, always operating in a mixing and masticating mode.

In the case of thermoplastic elastomers, the mixing and masticating operation before cross-linking is aimed at obtaining an intimate and homogeneous mixture of the elastomeric copolymer in the melted polymer, with the elastomer being in the form of particles with dimensions of about 1 micron, and preferably from 0.5 to 1 micron.

The length of the mastication, which generally speaking is carried out at temperatures from 160 to 240°C, depends on the type of the cross-linking agent. The cross-linking are preferably from 1 to 10 minutes.

During the process for the preparation of the cross-linking composition of the present invention one can add also different types of additives, that according to the known art are generally added to the cross-linking systems used up to know. Examples of said substances are hydrocarbon extension oils (such as Celtis 911 oil), zinc and magnesium oxides, stearic acid or its salts (such as zinc, calcium, or magnesium, for example).

other components that can be added to the cross-linking composition of the present invention during the cross-linking process are, for example, reinforcing fillers (such as silica, talc, and carbon black) , pigments and dyes, thermal and optical stabilizers, antistatic and plasticizing agents.

The following examples are given in order to illustrate but not limit the present invention.

The data reported in the examples relative to the following properties of the compositions obtained have been determined according to the methods indicated below.

| Property | Method |
|---|---|
| - melt index (M.I.) | ASTM D-1238, condition L |
| - solubility | (see note below) |
| - oil absorption | ASTM D-471 |
| - compression set | ASTM D-395, method B |
| - tensile strength | ASTM D-412 |
| - elongation at break | ASTM D-412 |
| - tension set at 100% | ASTM D-412 |
| - tear strength type C | ASTM D-624 |
| - Shore A hardness | ASTM D-2240 |
| Note Determination of percentage solubility in xylene: one prepares a solution of the sample in xylene at a 1% concentration by weight, maintaining the sample in xylene at 135°C, and stirring the solution for one hour. Continuing the stirring, the solution is allowed to cool to 95°C, after which it is poured into a 25°C bath and kept there for 20 minutes without stirring, and 10 more minutes under agitation. The solution is then filtered, and acetone is added to a portion of the filtrate in order to secure the precipitation of the dissolved polymer. The polymer obtained in this manner is recovered, washed, dried, and weighed in order to determine the percentage of solubles in xylene. | |

### Example 1 and comparative example 1c

35 parts by weight of homopolypropylene, 65 parts of EPR copolymer, and 1 part by weight of a light stabilizer are introduced into an internal Brabender Plasticorder PLD mixer type 651. The mixing is carried out at 180°C at a speed of 50 rpm. After 2 minutes from the beginning of the mixing the peroxide is added while continuing to stir. The total mixing time is 10 minutes.

Table 1 shows the types of light stabilizers used, and the values of the melt index and oil absorption of the polymer mixture treated with the peroxide and the stabilizer.

Comparing the data one can see that at equal type and quantity of peroxide, as well as quantity of the stabilizer used, the polymer obtained in example 1 reaches higher cross-linking values.

### Examples 2 and 3 and comparative examples 2c, 3c, and 4c

A specific quantity of polymer and the proper quantity of the cross-linking composition not containing the peroxide are introduced in an internal Brabender Plasticorder PLD mixer type 651. The mixture is carried out at 180°C at a speed of 50 rpm. After 2 minutes from the beginning of the mixing the peroxide (Peroximon F40 MG) is added while continuing the stirring. The total mixing time is 10 minutes.

The cross-linked composition is melted in a press with plates heated to a temperature of 200°C for 10 minutes at atmospheric pressure, initially, and then for an additional 5 minutes at a pressure of about 200 atm. The resulting specimens are then cooled to 23°C in a second press at a pressure of 200 atm. The final dimensions of the specimens are 120x120x1 mm. A number of test pieces are cut from these specimens, and said test pieces are then used to determine the properties indicated in Tables 2 and 3.

### Example 4 and comparative example 5c

In a Buss 70, 17D, extruder with a screw turning at 279 rpm and having a temperature from 170° to 230°C, are introduced, using metering devices, a mixture of a predetermined quantity of homopolymer, an EPR copolymer in pellet form, and Lithene PH, previously blended in a Bambury mixer, and a mixture of Valtec HL002D in flake form, ZnO, Irganox B225, VP-3, and Peroximon F40, previously blended in a Dry Mixer. In addition, the Celtis 911 oil is introduced in the above mentioned extruder by a displacement pump. Subsequently, once the mixing and decomposition of the peroxide have started, a mixture of the preselected stabilizers carried on Valtec HL002D is added by a metering device.

The cross-linked composition is melted in a press with plates heated to a temperature of 200°C, initially, for 10 minutes, at atmospheric pressure, and then for an additional 5 minutes at a pressure of about 200 atm. The resulting specimens are then cooled to 23°C in a second press at a pressure of 200 atm. The final dimensions of the specimens are 120x120x1 mm. A number of test pieces are cut from these specimens, and said test pieces are then used to determine the properties indicated in Table 5.

Tables from 2 to 5 show, in parts by weight (p/w) or percentage by weight (% w), the quantities of polymers and cross-linking compositions used to prepare the cross-linked polymers, and the properties of the resulting cross-linked polymers.

The trademarks and acronyms shown in the Tables correspond to the following products:
- Dutral EP CS 18/89 (by Enichem Elastomeri): EPR copolymer with 55 wt% of ethylene and 45 wt% of propylene;
- Valtec HL002D: propylene homopolymer with an isotactic index of 96, and M.I. of 0.4 g/10 min;
- Lithene PH (by Revertex LTD): 1,2-polybutadiene;
- Peroximon F 40 MG: dibutyl peroxyisopropyl benzene (40%) + EPR (60%);
- VP-3: difurfuraldazine;
- Celtis: paraffin oil;
- Irganox 1010: pentaerythritil-tetrakis[3(3,5-di-tert-butyl-4-hydroxyphenyl)propionate];
- Chimassorb 944: poly{[6-(1,1,3,3-tetramethylbutyl)-imino]-1,3,5-triazine-2,4-diyl][4-(2,2,6,6-tetramethylpiperidyl)-imino]hexamethylene-[4-(2,2,6,6-tetramethylpiperidyl)imino};
- Tunivin 770: bis(2,2,6,6-tetramethyl-4-piperidyl) sebacate;
- DSTDP: distearylthiodipropionate;
- Irgafos 168: tri(2,4-di-tert-butylphenyl)phosphite;
- Irganox B 225: 50 wt% of Irganox 1010 + 50 wt% Irgafos 168.

**Table 1**

| | | |
|---|---|---|
| Example and comparative example | 1 | 1c |
| Dutral EP CS 18/89 (p/w) | 65 | 65 |
| Valtec HL002D (p/w) | 35 | 35 |
| Peroximon F40MG (p/w) | 1.25 | 1.25 |
| Chimassorb 944 (p/w) | 1 | - |
| Irganox 1010 (p/w) | - | 1 |
| Melt Index ¹⁾ (g/10 min.) | 5 | 14.2 |
| Oil absorption (% w) | 220 | 247 |

| | | |
|---|---|---|
| ¹⁾ conditions: temperature = 230°C and weight = 10 kg. | | |

**Table 2**

| | | | |
|---|---|---|---|
| Example and comparative example | 2 | 2c | 3c |
| Dutral EP CS 18/89 (p/w) | 65 | 65 | 65 |
| Valtec HL002D (p/w) | 35 | 35 | 35 |
| Peroximon F40MG (p/w) | 1.25 | 1.25 | 1.25 |
| VP-3 (p/w) | 0.18 | 0.18 | 0.18 |
| Chimassorb 944 (p/w) | 1.0 | - | - |
| Irganox 1010 (p/w) | - | - | 1.0 |

| Properties | | | |
|---|---|---|---|
| Insoluble in xylene (% w) | 89 | 87 | 80 |
| Oil absorption¹⁾ (% w) | 154 | 172 | 191 |

| | | | |
|---|---|---|---|
| ¹⁾ ASTM oil No. 3; temperature at 70°C for 7 days. | | | |

**Table 3**

| | | |
|---|---|---|
| Example and comparative example | 3 | 4c |
| Dutral EP CS 18/89 (p/w) | 69.0 | 69.0 |
| Valtec HL002D (p/w) | 29.5 | 29.5 |
| Lithene PH (p/w) | 1.5 | 1,5 |
| Peroximon F40 MG (p/w) | 1.25 | 1.25 |
| VP-3 (p/w) | 0.18 | 0.18 |
| Chimassorb 944 (p/w) | 1.0 | - |

| Properties | | |
|---|---|---|
| Oil absorption¹⁾ (% w) | 179 | 198 |
| Insoluble in xylene (% w) | 80 | 75 |

| | | |
|---|---|---|
| ¹⁾ ASTM oil No. 3; temperature at 70°C for 7 days. | | |

**Table 4**

| | | |
|---|---|---|
| Example and comparative example | 4 | 5c |
| Dutral EP CS 18/89 (p/w) | 41.9 | 41.9 |
| Valtec HL002D (p/w) | 17.9 | 17.9 |
| Lithene PH (% w) | 0.9 | 0.9 |
| Valtec HL100D flake (% w) | 2.12 | 2.12 |
| ZnO (% w) | 2.12 | 2.12 |
| Irganox B225 (% w) | 0.21 | 0.21 |
| VP-3 (% w) | 0.17 | 0.17 |
| Peroximon F40MG (p/w) | 1.25 | 1.25 |
| Celtis oil 911 (% w) | 28.75 | 28.75 |
| Valtec HL002D (% w) | 4.25 | 4.25 |
| Irganox B225 (% w) | 0.1 | - |
| Irganox 1010 (p/w) | - | 0.21 |
| DSTDP (% w) | - | 0.21 |
| Tinuvin 770 (% w) | 0.16 | - |
| Chimassorb 944 (% w) | 0.16 | - |

**Table 5**

| | | |
|---|---|---|
| Example and comparative example | 4 | 5c |
| Compression set (%) | 36 | 45 |
| Melt Index (230°C; 5 kg) | 1.3 | 2.2 |
| Oil absorption¹⁾ (% w) | 121 | 130 |
| Shore A hardness 5" | 74 | 70 |
| Tear type C | 26 | 30 |
| Tensile strength (MPa) | 6.3 | 5.5 |
| Elongation at break (%) | 350 | 330 |
| Tension set 100% (%) | 12 | 14 |
| Elongation at break²⁾ (residual %) | 94 | 74 |
| Tensile strength²⁾ (residual %) | 90 | 78 |
| Elongation at break³⁾ (residual %) | 103 | 77 |
| Tensile strength³⁾ (residual %) | 83 | 71 |
| Elongation at break⁴⁾ (residual %) | 88 | 53 |
| Tensile strength⁴⁾ (residual %) | 52 | 44 |

| | | |
|---|---|---|
| ¹⁾ ASTM oil No. 3; | | |
| ²⁾ After aging in a 150°C oven for 1 week; | | |
| ³⁾ After aging in a 150°C oven for 2 weeks; | | |
| ⁴⁾ After aging in a 150°C oven for 3 weeks. | | |

## Claims

1. A process for the dynamic cross-linking and stabilization of a heterophasic polypropylene composition comprising the admixture and/or mastication of the polymer in the presence of a composition suitable for cross-linking olefin polymers not containing organic sulfides, and comprising at least one organic peroxide, and at least one hindered amine light stabilizer compound (HALS) selected from the following general formulae: 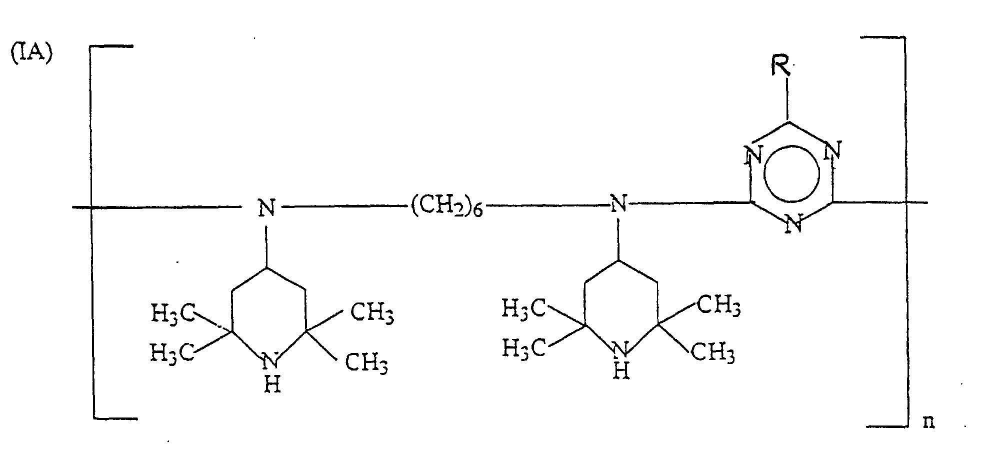 where n is an integer from 2 to 20;
R is an -NHR₅ radical [where R₅ is a C₁-C₁₀ alkyl radical, preferably -C(CH₃)₂-CH₂- C(CH₃)₃] or -N[(CH₂)-(CH₂)]₂O;
and 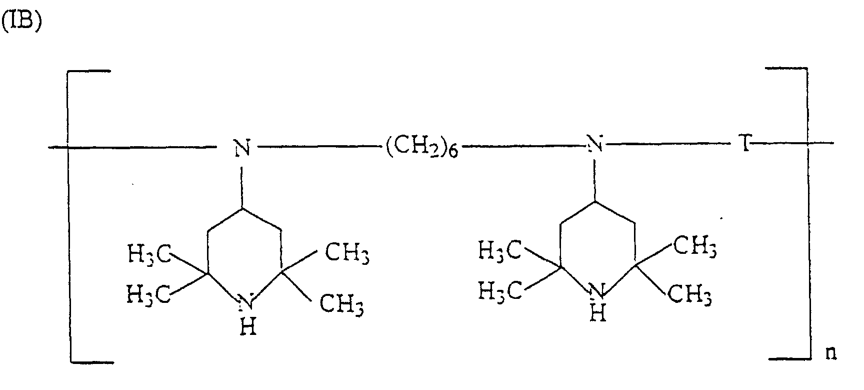 where T is -CH₂-CH₂-; and n is an integer from 2 to 20; 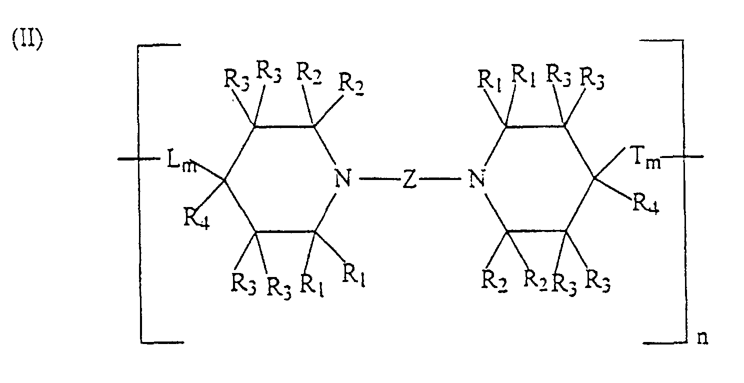 where n is an integer from 1 to 100;
the R₁ radicals, equal or different, are C₁-C₄ alkyl or tetramethylpiperidine radicals, or the alkyl radicals form, with the piperidine carbons to which they are bonded, a C₅-C₉ cycloalkyl radical; the R₂ radicals, equal or different, are hydrogen, or C₁-C₁₈ alkyl, C₇-C₁₈ aralkyl radicals, or the alkyl radicals form, with the piperidine carbons to which they are bonded, a C₅-C₁₀ cycloalkyl radical; the R₃ radicals, equal or different, are hydrogen, or a C₁-C₁₈ alkyl, or a C₇-C₁₈ arylalkyl radical; the R₄ radical is hydrogen, or a C₁-C₁₈ alkyl, or a benzyl radical;
L is a bivalent organic radical, preferably a C₁-C₁₂ alkylene, a -O-radical, or -N(R)-, where R is hydrogen or a C₁-C₁₈ alkyl radical;
T is a bivalent organic radical of the aliphatic, cycloaliphatic, aromatic or heterocyclic type, containing N or O, S, P atoms in the chain or in the heterocyclic ring;
Z is a C₁-C₁₂ alkylene or a bivalent saturated radical containing at least one ester or amide group;
m is a number from 0 to 1: 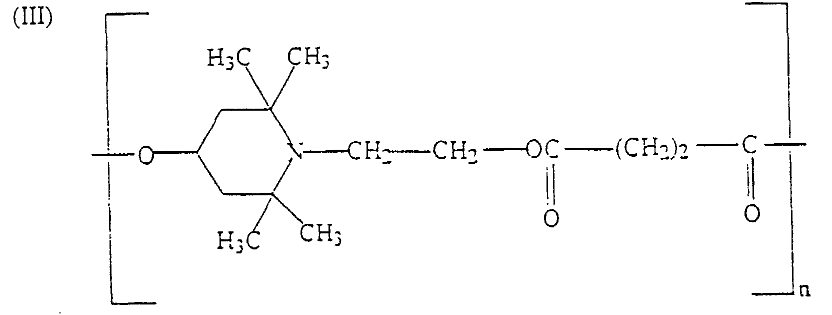 where n is and integer from 2 to 20; 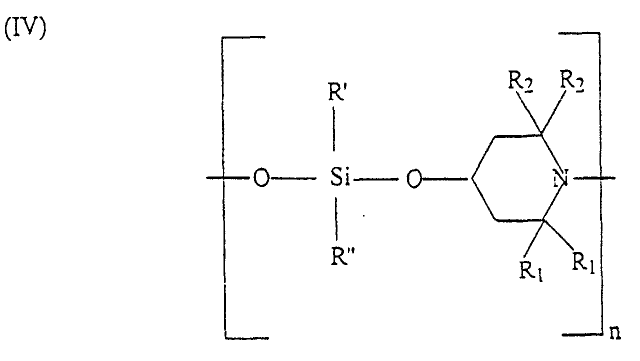 where the R₁ and R₂ radicals are as defined as above for formula (II); R' and R" independently from one another are hydrogen, C₁-C₈ alkyl, C₁-C₈ alkoxy radical; and n is an integer from 2 to 15;
and 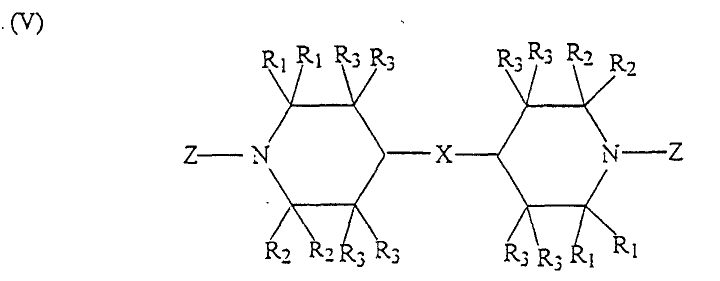 where R₁, R₂ and R₃ are defined as above for formula (II); X is a bivalent organic radical, preferably a C₁-C₁₂ alkylene, or a bivalent radical containing at least one ester or amide group and Z is hydrogen, or a C₁-C₁₈ alkyl, C₁-C₁₂ alkylene, C₇-C₁₈ aralkyl, C₂-C₄ acyl, C₂-C₁₈ alkanol, C₃-C₁₈ alkoxyalkyl, oxyl, cyanomethyl, xylene radical, or a radical having a valence ranging from 1 to 4, and containing from 1 to 4 oxylic groups and optionally ether, ester, or etheroxylic groups, where the valences of said radical are bonded to the nitrogen of the piperidine groups;
the said heterophasic polypropylene composition comprising (by weight):
A) from 10 to 60 parts of a homopolymer of propylene, or a random copolymer of propylene with ethylene and/or a C₄-C₈ α-olefin, containing more than 80% of propylene, and being insoluble in xylene at ambient temperature for more than 80%;
B) from 0 to 25 parts, preferably from 1 to 25 parts, of an essentially linear semicrystalline copolymer of ethylene containing propylene and/or a C₄-C₈ α-olefin, insoluble in xylene at ambient temperature; and
C) from 15 to 87 parts of a copolymer of ethylene with propylene or a C₄-C₈ α-olefin, or mixtures thereof, and optionally minor quantities of diene, said copolymer, containing from 10 to 80% of ethylene, being soluble in xylene at ambient temperature.

2. The process of claim 1, where the organic peroxide/light stabilizer ratio ranges from 1:1 to 6:1.

3. The process of claim 1 or 2, wherein the light stabilizer is selected from: poly (N-β-hydroxymethyl-2,2,6,6,-tetramethyl-4-hydroxy-piperidyl succinate), bis (1,2,2,6,6-pentamethyl-4-piperidyl) sebacate, bis(2,2,6,6-tetramethyl-4-piperidyl) sebacate, poly{[6-1,1,3,3-tetramethylbutyl)-imino]-1,3,5-triazine-2,4-diyl][4-(2,2,6,6-tetramethylpiperidyl)-imino]hexamethylene-[4-(2,2,6,6-tetramethylpiperidyl)imino}; polymethyl propyl-3-oxy[4-(2,2,6,6-tetramethyl)-piperidinyl]siloxane; and poly[hexamethylenedi(4-amino-2,2,6,6-tetramethyl)piperidine].

4. The process of any of the above claims, wherein the composition comprises stabilizers. selected from sterically hindered phenols and phosphites.

5. The process of any of the above claims, wherein the organic peroxide and light stabilizer are added separately and consecutively.

6. The process of any of the above claims comprising the use of a cross-linking coagent.

7. The process of claim 6, wherein the organic peroxide/cross-linking coagent ratio ranges from 1:0.05 to 1:0.6.

8. The process of any of the above claims carried out on blends of polypropylene with ethylene-propylene rubbers (EPR) or ethylene-propylene-diene rubbers (EPDM).

## Patentansprüche

1. Verfahren zur dynamischen Vernetzung und Stabilisierung einer heterophasischen Polypropylenzusammensetzung umfassend die Zumischung und/oder Mastikation des Polymeren in Gegenwart einer für die Vernetzung von Olefinpolymeren geeigneten Zusammensetzung, welche keine organischen Sulfide enthält und zumindest ein organisches Peroxid und zumindest eine gehindertes Amin-Lichtstabilisator-Verbindung (HALS), ausgewählt unter den folgenden allgemeinen Formeln, umfasst: 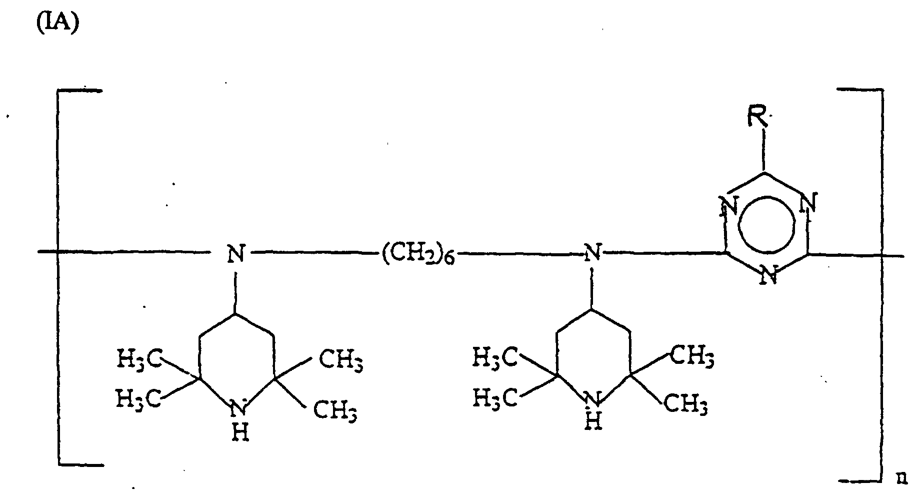 worin n eine ganze Zahl von 2 bis 20 ist,
R für einen Rest -NHR₅ [worin R₅ ein C₁-C₁₀-Akylrest, vorzugsweise -C(CH₃)₂-CH₂-C(CH₃)₃], oder -N[(CH₂)-(CH₂)]₂O ist, und 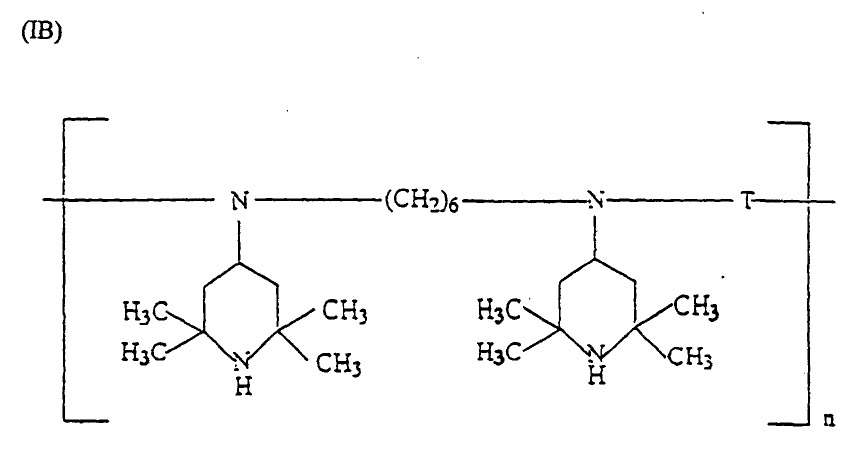 worin T für -CH₂-CH₂- steht, und n eine ganze Zahl von 2 bis 20 ist, 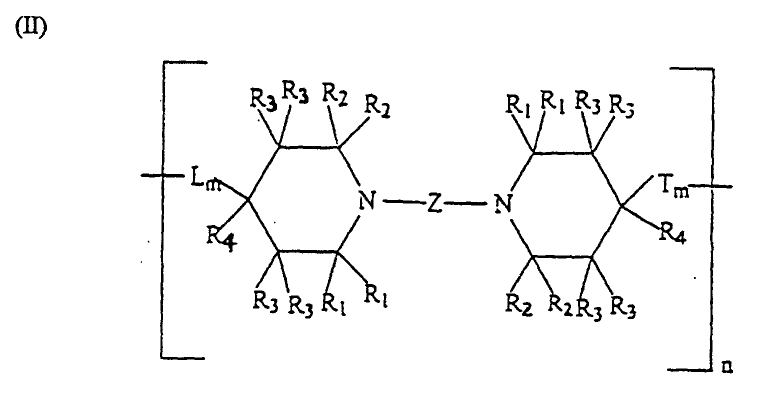 worin n eine ganze Zahl von 1 bis 100 ist,
die Reste R₁ gleich oder voneinander verschieden C₁-C₄-Alkyl oder Tetramethylpiperidinreste sind, oder die Alkylreste mit den Piperidinkohlenstoffen, an die sie gebunden sind, einen C₅-C₉-Cycloalkylrest bilden; die Reste R₂ gleich oder voneinander verschieden Wasserstoff oder Reste C₁-C₁₈-Alkyl, C₇-C₁₈-Aralkyl sind, oder die Alkylreste mit den Piperidinkohlenstoffen, an die sie gebunden sind, einen C₅-C₁₀-Cycloalkylrest bilden; die Reste R₃ gleich oder voneinander verschieden Wasserstoff oder einen Rest C₁-C₁₈-Alkyl oder C₇-C₁₈-Aralkyl bedeuten; der Rest R₄ Wasserstoff oder ein Rest C₁-C₁₈-Alkyl oder Benzyl ist,
L für einen zweiwertigen organischen Rest, vorzugsweise einen Rest C₁-C₁₂-Alkylen, einen Rest -O- oder -N(R)- steht, worin R Wasserstoff oder ein C₁-C₁₈-Alkylrest ist,
T für einen zweiwertigen organischen Rest vom aliphatischen, cycloaliphatischen, aromatischen oder heterocyclischen Typ steht, der Atome N oder O, S, P in der Kette oder in dem heterocyclischen Ring enthält,
Z für einen C₁-C₁₂-Alkylenrest oder einen zweiwertigen gesättigten Rest, der zumindest eine Ester- oder Amidgruppe enthält, steht,
m für eine Zahl von 0 bis 1 steht, 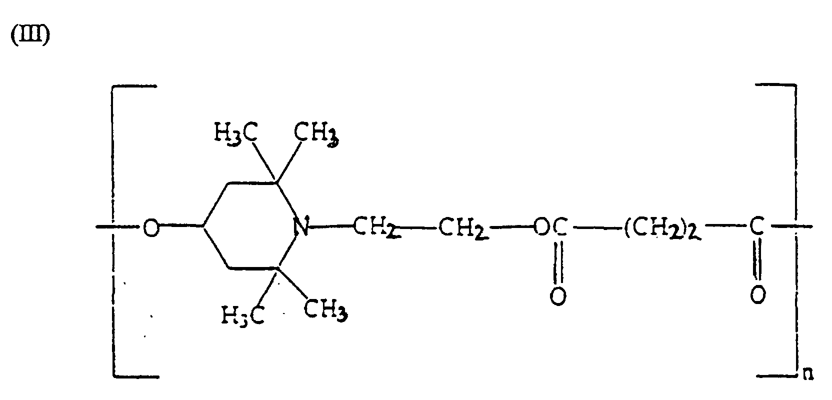 worin n eine ganze Zahl von 2 bis 20 ist, 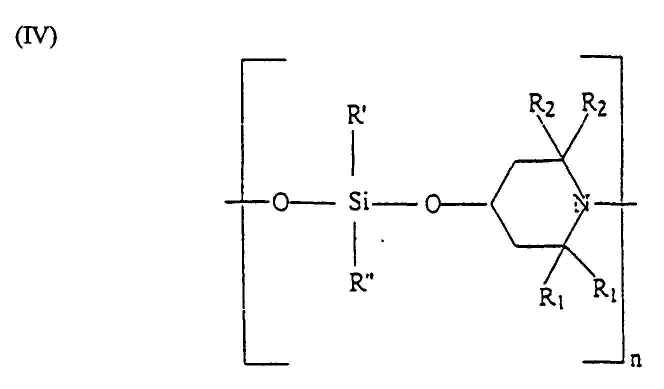 worin die Reste R₁ und R₂ wie vorstehend für Formel (II) definiert sind; R' und R" unabhängig voneinander Wasserstoff, einen Rest C₁-C₈-Alkyl, C₁-C₈-Alkoxy bedeuten, und n für eine ganze Zahl von 2 bis 15 steht, und 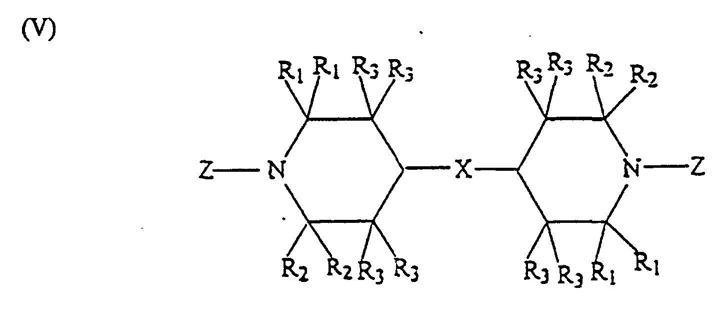 worin R₁, R₂ und R₃ wie vorstehend für Formel (II) definiert sind, X ein zweiwertiger organischer Rest, vorzugsweise ein C₁-C₁₂-Alkylenrest oder ein zweiwertiger Rest, enthaltend zumindest eine Ester- oder Amidgruppe, ist, und Z für Wasserstoff oder einen Rest C₁-C₁₈-Alkyl, C₁-C₁₂-Alkylen, C₇-C₁₈-Aralkyl, C₂-C₄-Acyl, C₂-C₁₈-Alkanol, C₃-C₁₈-Alkoxyalkyl, Oxyl, Cyanomethyl, Xylol oder einen Rest mit einer Wertigkeit im Bereich von 1 bis 4 und 1 bis 4 oxylische Gruppen und gegebenenfalls Ether-, Esteroder etheroxylische Gruppen enthaltend, steht, wobei die Valenzen dieses Restes an den Stickstoff der Piperidingruppen gebunden sind,
wobei besagte heterophasische Polypropylenzusammensetzung umfasst (auf Gewicht bezogen):
A) 10 bis 60 Teile eines Homopolymeren von Propylen oder eines statistischen Copolymeren von Propylen mit Ethylen und/oder einem C₄-C₈-α-Olefin, enthaltend mehr als 80 % Propylen, und zu mehr als 80 % unlöslich in Xylol bei Raumtemperatur,
B) 0 bis 25 Teile, vorzugsweise 1 bis 25 Teile, eines im wesentlichen linearen semikristallinen Copolymeren von Ethylen, enthaltend Propylen und/oder ein C₄-C₈-α-Olefin, bei Raumtemperatur in Xylol unlöslich, und
C) 15 bis 87 Teile eines Copolymeren von Ethylen mit Propylen oder einem C₄-C₈-α-Olefin oder Mischungen hiervon und gegebenenfalls geringeren Anteilen eines Diens,
wobei besagtes Copolymer, enthaltend 10 bis 80 % Ethylen, in Xylol bei Raumtemperatur löslich ist.

2. Verfahren gemäß Anspruch 1, worin das Verhältnis organisches Peroxid/Lichtstabilisator im Bereich von 1:1 bis 6:1 liegt.

3. Verfahren gemäß Anspruch 1 oder 2, worin der Lichtstabilisator ausgewählt wird unter Poly-(N-β-hydroxymethyl-2,2,6,6-tetramethyl-4-hydroxy-piperidylsuccinat), Bis-(1,2,2,6,6-pentamethyl-4-piperidyl)-sebacat, Bis-(2,2,6,6-tetramethyl-4-piperidyl)-sebacat, Poly-{[6-1,1,3,3-tetramethylbutyl)-imino]-1,3,5-triazin-2,4-diyl]-[4-(2,2,6,6-tetramethylpiperidyl)-imino]-hexamethylen-[4-(2,2,6,6-tetramethylpiperidyl)-imino}; Polymethylpropyl-3-oxy-[4-(2,2,6,6-tetramethyl)-piperidinyl]-siloxan und Poly-[hexamethylendi-(4-amino-2,2,6,6-tetramethyl)-piperidin].

4. Verfahren gemäß einem der vorhergehenden Ansprüche, worin die Zusammensetzung Stabilisatoren umfasst, ausgewählt unter sterisch gehinderten Phenolen und Phosphiten.

5. Verfahren gemäß einem der vorhergehenden Ansprüche, worin das organische Peroxid und der Lichtstabilisator getrennt und nacheinander zugesetzt werden.

6. Verfahren gemäß einem der vorhergehenden Ansprüche, umfassend die Verwendung eines Vernetzungs-Comittels.

7. Verfahren gemäß Anspruch 6, worin das Verhältnis organisches Peroxid/Vernetzungs-Comittel im Bereich von 1:0,05 bis 1:0,6 liegt.

8. Verfahren gemäß einem der vorhergehenden Ansprüche, durchgeführt an Mischungen von Polypropylen mit Ethylen/Propylen-Kautschuken (EPR) oder Ethylen/Propylen/Dien-Kautschuken (EPDM).

## Revendications

1. Procédé pour la réticulation dynamique et la stabilisation d'une composition de polypropylène hétérophasique comprenant le mélange et/ou la trituration du polymère en présence d'une composition convenable pour la ..réticulation de polymères d'oléfines ne contenant pas de sulfures organiques, et comprenant au moins un peroxyde organique, et au moins un stabilisant vis-à-vis de la lumière de type amine encombrée (HALS) choisi parmi les formules générales suivantes: 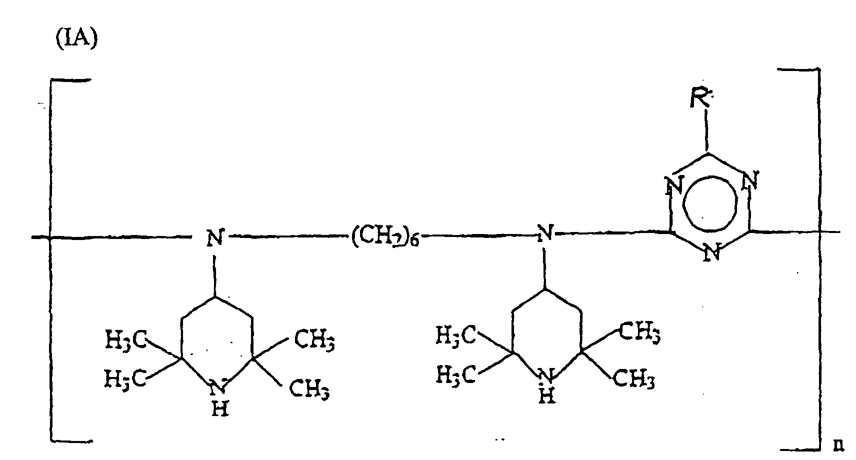 dans laquelle n est un entier de 2 à 20;
R est un groupe -NHR₅ [dans lequel R₅ est un groupe alkyle en C₁₋₁₀, de préférence -C(CH₃)₂-CH₂-C(CH₃)₃] ou -N[(CH₂)-(CH₂)]₂O;
et 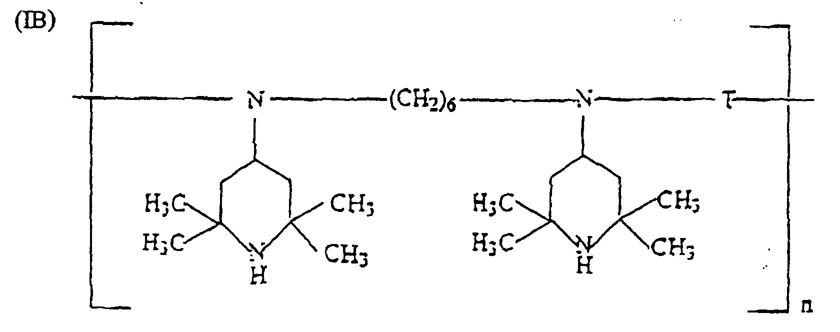 dans laquelle T est un groupe -CH₂-CH₂-; et n est un entier de 2 à 20; 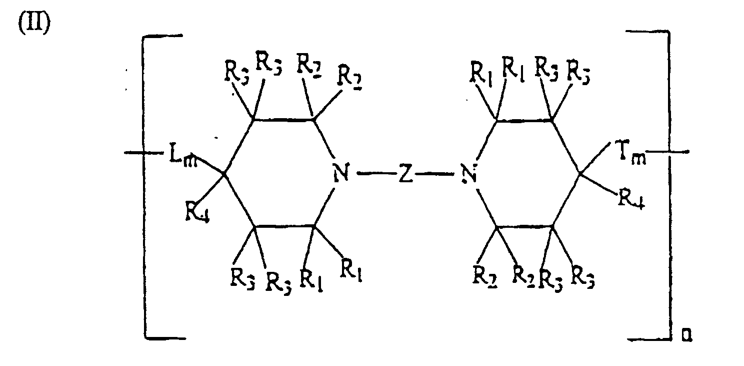 dans laquelle n est un entier de 1 à 100;
les groupes R₁, identiques ou différents, sont des groupes alkyle en C₁₋₄ ou tétraméthylpipéridine, ou bien les groupes alkyle forment avec les atomes de carbone de la pipéridine auxquels ils sont liés, un groupe cycloalkyle en C_{5-9;} les groupes R₂, identiques ou différents, sont un atome d'hydrogène ou des groupes alkyle en C₁₋₁₈, aralkyle en C₇₋₁₈, ou bien les groupes alkyle forment avec les atomes de carbone de la pipéridine auxquels ils sont liés, un groupe cycloalkyle en C_{5-10;} les groupes R₃, identiques ou différents, sont un atome d'hydrogène ou des groupes alkyle en C₁₋₁₈, ou aralkyle en C₇₋₁₈; le groupe R₄ est un atome d'hydrogène ou un groupe alkyle en C₁₋₁₈, ou un groupe benzyle;
L est un groupe organique bivalent, de préférence un groupe alkylène en C₁₋₁₂, un radical -O-, ou -N(R)- dans lequel R est un atome d'hydrogène ou un groupe alkyle en C₁₋₁₈;
T est un groupe organique bivalent du type aliphatique, cycloaliphatique, aromatique ou hétérocyclique, contenant des atomes de N ou O, S, P dans la chaîne ou dans le noyau hétérocyclique;
Z est un groupe alkylène en C₁₋₁₂, ou un groupe saturé bivalent contenant au moins un groupe ester ou amide;
m est un nombre de 0 à 1; 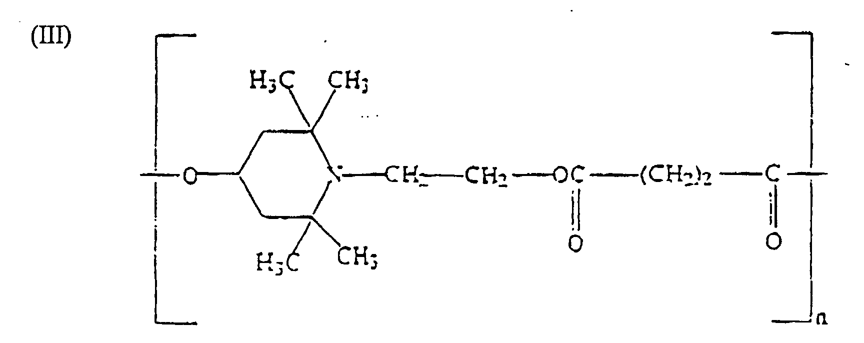 dans laquelle n est un entier de 2 à 20; 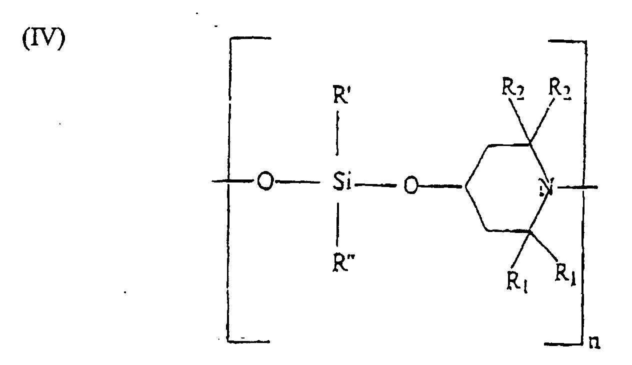 dans laquelle R₁ et R₂ sont tels que définis plus haut pour la formule (II); R' et R" sont indépendamment l'un de l'autre, un atome d'hydrogène, un groupe alkyle en C₁₋₈, un groupe alcoxy en C₁₋₈; et n est un entier de 2 à 15;
et 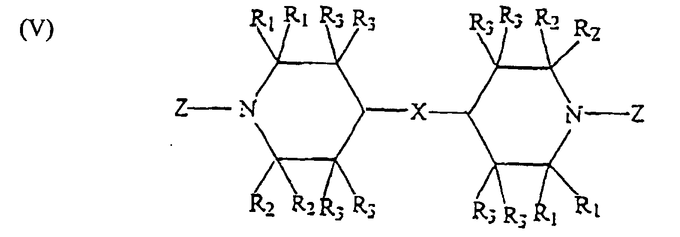 dans laquelle:
R₁, R₂ et R₃ sont tels que définis plus haut pour la formule (II);
X est un groupe organique bivalent, de préférence un groupe alkylène en C₁₋₁₂, ou un groupe bivalent contenant au moins un groupe ester ou amide, et
Z est un atome d'hydrogène, ou un groupe alkyle en C₁₋₁₈, alkylène en C₁₋₁₂, aralkyle en C₇₋₁₈, acyle en C₂₋₄, alcanol en C₂₋₁₈, alcoxyalkyle en C₃₋₁₈, oxyle, cyanométhyle, xylène, ou un groupe ayant une valence comprise entre 1 et 4, et contenant de 1 à 4 groupes oxyliques et éventuellement des groupes éther, ester ou éthéroxylique, où les valences dudit groupe sont liées à l'atome d'azote des groupes pipéridine;
ladite composition de polypropylène hétérophasique comprenant, en poids:
A) de 10 à 60 parties d'un homopolymère de propylène, ou d'un copolymère statistique de propylène avec de l'éthylène et/ou une α-oléfine en C₄₋₈, contenant plus de 80% de propylène, et étant insoluble à plus de 80% dans le xylène à la température ambiante;
B) de 0 à 25 parties, de préférence de 1 à 25 parties, d'un copolymère semicristallin essentiellement linéaire d'éthylène contenant du propylène et/ou une α-oléfine en C₄₋₈, insoluble dans le xylène à la température ambiante; et
C) de 15 à 87 parties d'un copolymère d'éthylène avec du propylène ou une α-oléfine en C₄₋₈, ou des mélanges de ceux-ci, et éventuellement des quantités mineures de diène, ledit copolymère, contenant de 10 à 80% d'éthylène, étant soluble dans le xylène à la température ambiante.

2. Procédé suivant la revendication 1, dans lequel le rapport du peroxyde organique au stabilisant vis-à-vis de la lumière est compris dans la gamme de 1:1 à 6:1.

3. Procédé suivant les revendications 1 ou 2, dans lequel le stabilisant vis-à-vis de la lumière est choisi parmi un poly-(succinate de N-β-hydroxyméthyl-2,2,6,6-tétraméthyl-4-hydroxy-pipéridyle), le sébacate de bis-(1,2,2,6,6-pentaméthyl-4-pipéridyle), le sébacate de bis-(2,2,6,6-tétraméthyl-4-pipéridyle), un poly-{[6-(1,1,3,3-tétraméthylbutyl)-imino]-1,3,5-triazine-2,4-diyl][4-(2,2,6,6-tétraméthylpipéridyl)- imino]-hexaméthylène-[4-(2,2,6,6-tétraméthylpipéridyl)-imino}; un polyméthylpropyl-3-oxy-[4-(2,2,6,6-tétraméthyl)-pipéridinyl]-siloxane; et un poly-[hexaméthylènedi-(4-amino-2,2,6,6-tétraméthyl)-pipéridine].

4. Procédé suivant l'une quelconque des revendications précédentes, dans lequel la composition comprend des stabilisants choisis parmi des phosphites et des phénols encombrés stériquement.

5. Procédé suivant l'une quelconque des revendications précédentes, dans lequel le peroxyde organique et le stabilisant vis-à-vis de la lumière sont ajoutés séparément et consécutivement.

6. Procédé suivant l'une quelconque des revendications précédentes, comprenant l'utilisation d'un co-agent de réticulation.

7. Procédé suivant la revendication 6, dans lequel le rapport du peroxyde organique au co-agent de réticulation est compris dans la gamme de 1:0,05 à 1:0,6.

8. Procédé suivant l'une quelconque des revendications précédentes effectué sur des mélanges de polypropylène avec des caoutchoucs éthylène-propylène (EPR) ou des caoutchoucs éthylène-propylène-diène (EPDM).
